# EUROPÄISCHE PATENTSCHRIFT

(11) **EP 3 383 671 B1**
(45) Veröffentlichungstag und Bekanntmachung des Hinweises auf die Patenterteilung: **06.11.2019**
(21) Anmeldenummer: 16765987.9
(22) Anmeldetag: 15.09.2016
(51) Int. Cl.: B60C 11/03, B60C 11/12, B60C 11/13, B60C 11/11

(54) **FAHRZEUGLUFTREIFEN**
PNEUMATIC VEHICLE TYRES
PNEUMATIQUE DE VÉHICULE

(30) Priorität: 04.12.2015 DE 102015224293
(43) Veröffentlichungstag der Anmeldung: 10.10.2018
(73) Patentinhaber: Continental Reifen Deutschland GmbH, 30165 Hannover (DE)
(72) Erfinder: BROCKMANN, Jürgen, 30171 Hannover (DE); WIESE, Klaus, 30559 Hannover (DE); SENG, Matthias, 30453 Hannover (DE)
(74) Vertreter: Finger, Karsten
(86) Internationale Anmeldenummer: PCT/EP2016/071741
(87) Internationale Veröffentlichungsnummer: WO 2017/092899

(56) Entgegenhaltungen:
- EP-A1- 2 130 692
- JP-A- 2001 063 319
- JP-A- 2002 301 909

## Beschreibung

Die Erfindung betrifft einen Fahrzeugluftreifen für Personenkraftwagen, insbesondere für den Einsatz unter winterlichen Fahrbedingungen, mit einem Laufstreifen mit Profilpositiven, insbesondere Profilblöcken, und mit über die Laufstreifenbreite V-förmig verlaufenden Diagonalrillen, welche Profilpositive begrenzen, wobei Profilpositive vorgesehen sind, in welchen jeweils eine Anzahl von im Wesentlichen parallel zueinander verlaufenden Einschnitten ausgebildet ist, welche sich unter einem Winkel von 60° bis 90° zu einer das Profilpositiv bei einer Diagonalrille begrenzenden Profilpositivkante erstrecken und an der zugehörigen Profilpositivflanke in die Diagonalrille münden.

Es ist bekannt und üblich, PKW-Winterreifen mit einem Laufstreifen zu versehen, dessen Profilpositive, meist Profilblöcke, jeweils mit einer Vielzahl von in jedem Profilpositiv parallel zueinander verlaufenden Einschnitten mit einer Breite von 0,4 mm bis 0,6 mm zu versehen. Um eine besonders gute Aquaplaningperformance sicherzustellen, ist es üblich, die die Rillen begrenzenden und entlang von Rillen verlaufenden Flanken der Profilblöcke möglichst glatt auszuführen. Die Vielzahl an Einschnitten in den Profilblöcken ermöglicht Verformungen der einzelnen durch die Einschnitte im Profilblock gebildeten Profilblockelemente und damit auch gute Griffeigenschaften auf schneeigem und eisigem Untergrund.

Ein Fahrzeugluftreifen der eingangs genannten Art ist beispielsweise aus der EP 2 222 481 B1 bekannt. Der Laufstreifen dieses Reifens ist laufrichtungsgebunden ausgeführt und weist Diagonalrillen und Umfangsrillen auf, welche sich entgegen der Abrollrichtung bei Vorwärtsfahrt jeweils kontinuierlich über ihren Verlauf zwischen einander benachbarten Diagonalrillen verbreitern. Die schmalen Enden der Umfangsrillen besitzen eine Breite von 1 mm bis 2 mm, die breiten Enden eine Breite von 3 mm bis 5 mm.

Aus der EP 2 1 30 692 A1 ist ein Fahrzeugluftreifen mit einem Laufstreifen mit zwei mittleren und zwei schulterseitigen Umfangsrillen bekannt, welche in Umfangsrichtung umlaufende Profilrippen voneinander trennen. An den die Profilrippe zur Umfangsrille begrenzenden Rippenflanken ist jeweils eine Vielzahl von parallel zueinander verlaufenden Mikrorillen mit einer Breite von 0,2 mm bis 0,8 mm ausgebildet. Die Mikrorillen erstrecken sich unter einem Winkel von 20° bis 70° zur Umfangsrichtung und daher auch unter diesem Winkel zu den Profilrippenkanten. Die Mikrorillen, welche an den beiden Rippenflanken verlaufen, die jeweils eine schulterseitige Umfangsrille begrenzen, sind relativ zur Umfangsrichtung gleichsinnig zueinander orientiert und die Mikrorillen, welche an den beiden Rippenflanken verlaufen, die jeweils eine mittlere Umfangsrille begrenzen, sind relativ zur Umfangsrichtung gegensinnig zueinander orientiert.

Die JP 2001 063 319 A offenbart einen Fahrzeugluftreifen mit einem Laufstreifen mit einem Blockprofil, welches durch Umfangsrillen und Querrillen voneinander getrennte Profilblöcke aufweist. An den an den Umfangsrillen liegenden Blockflanken sind sägezahnartige Rippen ausgebildet, welche beim Fahren auf schneebedeckter Fahrbahn den Halt von Schnee in der Umfangsrille verbessern sollen.

Ferner ist aus der JP 2002 301 909 A ist ein weiterer Fahrzeugluftreifen mit einem Laufstreifen mit Umfangsrillen, Querrillen und Profilblöcken bekannt. An den Blockflanken, welche an den Querrillen liegen, sind Mikrorillen ausgebildet, die entweder zur in der Laufstreifenperipherie liegenden Blockoberfläche oder zur an der Umfangsrille liegenden Blockflanke oder zwischen der Blockoberfläche und dieser Blockflanke verlaufen.

Der Erfindung liegt die Aufgabe zugrunde, die Winterfahreigenschaften eines Reifens der eingangs genannten Art, insbesondere auf Schnee und Schneematsch, noch weiter zu verbessern, ohne die Aquaplaningperformance zu beeinträchtigen.

Gelöst wird die gestellte Aufgabe erfindungsgemäß dadurch, dass an Profilpositivflanken von Profilpositiven, welche die Diagonalrillen begrenzen und bei welchen die Einschnitte unter einem Winkel von 60° bis 90° zu den zugehörigen Profilpositivkanten verlaufen, im Wesentlichen geradlinig verlaufende Mikrorillen ausgebildet sind, welche sich derart entlang der Profilpositivflanken unter einem spitzen Winkel von 20° bis 40° zu den Profilpositivkanten erstrecken, dass sie in Richtung Laufstreifenaußenseite zur Profilpositivoberfläche ansteigen und welche eine Tiefe von 0,2 mm bis 0,5 mm und an der Profilpositivflanke eine Breite aufweisen, die zumindest ihrer Tiefe entspricht.

Die gemäß der Erfindung an den Profilpositivflanken ausgebildeten Mikrorillen sind in der Lage, geringe Mengen an Schnee aufzunehmen und können daher die beim Durchrutschen von Schnee durch die Rillen entstehenden Scherkräfte auf die Profilpositivflanken übertragen. Diese Kräfte verformen das Profilpositiv derart, dass sich die im Profilpositv ausgebildeten Einschnitte etwas öffnen. Dadurch kann sich Schnee in den Einschnitten sammeln und die Schnee-Schneereibung und damit die Traktion auf Schnee werden erhöht. Nachdem die Mikrorillen unter einem kleinen spitzen Winkel zum Rillengrund verlaufen, beeinträchtigen sie nicht das Wasserdrainagevermögen der Rillen, ganz im Gegenteil, sie können sogar zu einer verbesserten Wasserableitung beitragen.

Bei einer bevorzugten Ausführungsform der Erfindung verlaufen die Mikrorillen zumindest im Wesentlichen parallel zueinander und unter einem gegenseitigen Normalabstand von 3 mm bis 10 mm, insbesondere von bis zu 7 mm. Diese Maßnahme ist besonders günstig für ein optimales Übertragen der beim Durchrutschen von Schnee durch die Rillen entstehenden Scherkräfte auf die Profilpositivflanken.

Eine Anzahl weiterer erfindungsgemäßer Maßnahmen ist für eine optimale Übertragung der Scherkräfte ebenfalls besonders vorteilhaft. Zu diesen Maßnahmen gehört, dass die Breite der Mikrorillen an den Profilpositivflanken bis zum Vierfachen ihrer Tiefe, insbesondere bis zum Zweifachen ihrer Tiefe, beträgt.

Auch der Verlauf der Mikrorillen an den Profilpositivflanken spielt diesbezüglich eine Rolle. Von besonderem Vorteil ist es, wenn die Mikrorillen entweder bis zur Profilpositivkante an der Oberfläche des betreffenden Profilpositivs oder bis zu einer weiteren, eine Rille begrenzenden Profilpositivflanke sowie bis zum Rillengrund bzw. bis zu einer Übergangsrundung zwischen der Profilpositivflanke und dem Rillengrund verlaufen.

Des Weiteren können die Mikrorillen vorteilhafterweise derart verlaufen, dass sie einen oder mehrere der an der Profilpositivflanke mündenden Einschnitte kreuzen. Es ist jedoch von Vorteil, wenn zumindest einige der Mikrorille in ihrem Verlauf einen oder mehrere der an der Profilpositivflanke mündenden Endabschnitte der Einschnitte kreuzen.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf eine Teilabwicklung eines Laufstreifens eines Fahrzeugluftreifens,
Fig. 2 einen Schnitt entlang der Linie II-II der Fig. 1 in vergrößerter Darstellung und
Fig. 3 eine Ansicht auf Blockflanken von Profilblöcken, die eine Rille begrenzen, gemäß der Linie III-III der Fig. 1.

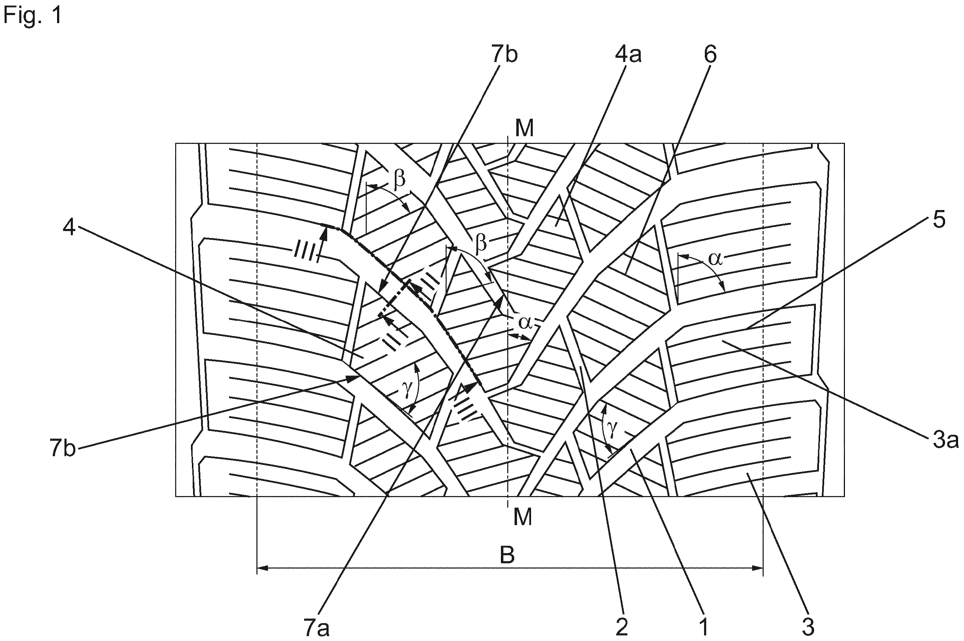

Der in Fig. 1 gezeigte Laufstreifen ist für Fahrzeugluftreifen von Personenkraftwagen, Vans oder dergleichen vorgesehen, insbesondere für den Einsatz unter winterlichen Fahrbedingungen, und ist laufrichtungsgebunden ausgeführt. Die Erfindung ist jedoch nicht auf laufrichtungsgebunden ausgestaltete Laufstreifen beschränkt. Mit B ist die Breite des bodenberührenden Teils des Laufstreifens bezeichnet, also jene Breite, über welche der Reifen beim Abrollen mit dem Untergrund in Kontakt tritt. Der bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Beim dargestellten Ausführungsbeispiel ist der Laufstreifen über seine Breite B mit V-förmig verlaufenden Diagonalrillen 1 versehen und durch zwischen benachbarten Diagonalrillen 1 verlaufende Umfangsrillen 2 in schulterseitige Profilblöcke 3 und in im mittleren Bereich des Laufstreifens angeordnete mittige Profilblöcke 4 gegliedert. Die Diagonalrillen 1 sind die Hauptrillen des Laufstreifens und verlaufen im zentralen Bereich des Laufstreifens, im Bereich ihrer hier verlaufenden Endabschnitte, unter einem Winkel α ≤ 60°, bei der gezeigten Ausführung von etwa 35°, zur Umfangsrichtung. In Richtung zu den Laufstreifenrändern wird der Winkel α zunehmend größer, sodass die Diagonalrillen 1 zwischen den schulterseitigen Profilblöcken 3 unter einem Winkel α von 65° bis 90° zur Umfangsrichtung verlaufen. Die in der einen Laufstreifenhälfte verlaufenden Diagonalrillen 1 sind gegenüber jenen, die in der anderen Laufstreifenhälfte verlaufen, in Umfangsrichtung etwas versetzt, wobei im zentralen Bereich des Laufstreifens die Diagonalrillen 1 ineinander münden. Dabei erstrecken sich die Diagonalrillen 1 jeweils über die Umfangsmittellinie M-M etwas hinaus. In bekannter Weise weisen ferner die Diagonalrillen 1 im Laufstreifenzentrum eine geringere Breite auf als schulterseitig, wobei die Breite vom zentralen Bereich in Richtung Laufstreifenränder zumindest im Wesentlichen kontinuierlich größer wird. Die Profilstrukturen, die Diagonalrillen 1 und die Profilblöcke 3, 4, sind gemäß einem Verfahren der Pitchlängenvariation geräuschoptimiert ausgelegt und weisen daher zumindest zwei unterschiedliche Pitchlängen auf, wobei die Aufeinanderfolge der sich über den Umfang angeordneten Pitches, wie an sich bekannt, gemäß einer rechnerisch ermittelten Pitchfolge erfolgt. Die diesbezüglichen Maßnahmen sind nicht Gegenstand dieser Erfindung, sodass auf sie nicht eingegangen wird.

Bei einer nicht laufrichtungsgebundenen Ausführung des Laufstreifens können die Diagonalrillen 1 über die Laufstreifenbreite beispielsweise entlang von schwach S-förmig gekrümmten Kurven verlaufen.

Ein Reifen mit dem durch den dargestellten Verlauf der Diagonalrillen 1 laufrichtungsgebunden ausgeführten Laufstreifen ist derart am Fahrzeug zu montieren, dass die laufstreifeninnenseitigen Enden der Diagonalrillen 1 beim Abrollen des Reifens bei Vorwärtsfahrt zuerst in den Untergrund eintreten.

Die schulterseitigen Profilblöcke 3 sind jeweils mit einer Anzahl von sich zumindest im Wesentlichen parallel zueinander erstreckenden Einschnitten 5 versehen, welche die schulterseitigen Profilblöcke 3 in Profilblockelemente 3a gliedern. Bei der in Fig. 1 gezeigten Ausführung verlaufen die Einschnitte 5 in Draufsicht geradlinig, können jedoch auch zumindest abschnittsweise wellen- bzw. zickzackförmig verlaufen. Auch in den mittigen Profilblöcken 4 sind Einschnitte 6 ausgebildet, welche die mittigen Profilblöcke 4 in Profilblockelemente 4a gliedern und in jedem Profilblock 4 ebenfalls zumindest im Wesentlichen parallel zueinander verlaufen, wobei sie sich in jeder Laufstreifenhälfte gegensinnig zu den Diagonalrillen 1 erstrecken und dabei unter einem Winkel β ≥ 60° zur Umfangsrichtung verlaufen. Auch die Einschnitte 6 weisen bei der in Fig. 1 dargestellten Ausführungsform einen in Draufsicht geradlinigen Verlauf auf, können jedoch, ebenso wie die Einschnitte 5, zumindest abschnittsweise zickzack- oder wellenförmig verlaufen. Die Einschnitte 5, 6 weisen insbesondere die bei Winterreifen übliche Breite von 0,4 mm bis 0,6 mm auf. Der in Draufsicht auf die Profilblöcke 4 jeweils spitze Winkel γ zwischen der Erstreckungsrichtung der Einschnitte 6 und den die Profilblöcke 4 an ihrer Oberfläche zu den Diagonalrillen 1 begrenzenden Blockkanten 8a, 8b beträgt 60° bis 90°.

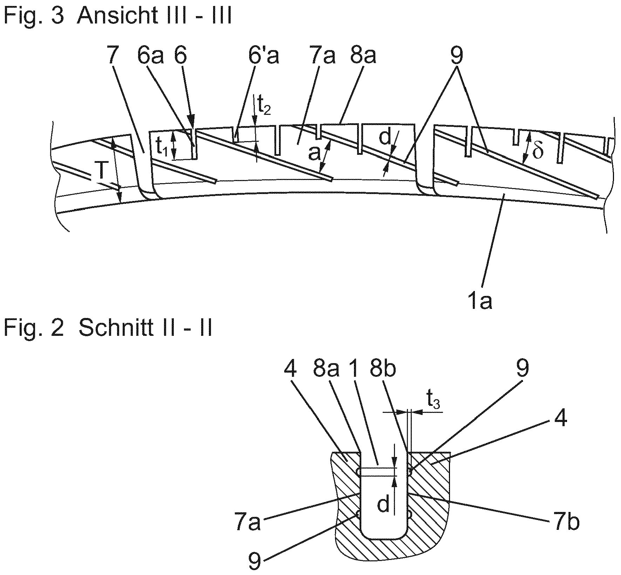

Wie die Schnittdarstellung in Fig. 2 zeigt ist jede Diagonalrille 1 zwischen den mittigen Profilblöcken 4 von einander gegenüberliegenden Blockflanken 7a, 7b begrenzt, wobei die Blockflanken 7a, 7b jeweils zu zwei in Umfangsrichtung aufeinander folgenden mittigen Profilblöcken 4 gehören. An beiden Blockflanken 7a, 7b mündet jeweils eine Anzahl von Einschnitten 6, wie es beispielsweise Fig. 3 an Blockflanken 7a zeigt. Bei der gezeigten Ausführung weisen ferner die Einschnitte 6 beispielhaft unterschiedlich tiefe Endabschnitte 6a, 6'a an den Blockflanken 7a, 8a auf, wobei die Endabschnitte 6a eine größere Tiefe aufweisen als die Endabschnitte 6'a und wobei jeweils ein Einschnitt 6, welcher einen tieferen Endabschnitt 6a aufweist, mit einem Einschnitt 6, welcher einen seichteren Endabschnitt 6'a aufweist, abwechselt. Die Tiefe t₁ der Endabschnitte 6a beträgt 40 % bis 60 % der Tiefe T der Diagonalrille 1, die Tiefe t₂ der Endabschnitte 6'a 15 % bis 30 % der Tiefe T der Diagonalrille 1. Bevorzugt weisen ferner die an den Blockflanken 7a, 7b einer Umfangsrille 2 unmittelbar benachbart einmündenden Einschnitte 6 einen Endabschnitt 6a größerer Tiefe t₁ auf.

Wie Fig. 2 in Verbindung mit Fig. 3 zeigt, sind an den Blockflanken 7a, 7b Mikrorillen 9 ausgebildet - Fig. 3 zeigt dabei die Blockflanke 7a - welche sich über die Blockflanken 7a, 7b geradlinig oder im Wesentlichen geradlinig erstrecken und an den Blockflanken 7a, 7b mit den Blockkanten 8a, 8b einen spitzen Winkel δ von 20° bis 40° einschließen. Die Mikrorillen 9 sind daher zur Oberfläche der Profilblöcke 4 nur geringfügig geneigt. Die Mikrorillen 9 verlaufen gemäß der bevorzugten und in Fig. 3 gezeigten Ausführungsform parallel zueinander und unter gegenseitigen Normalabständen a von 3 mm bis 10 mm, vorzugsweise bis zu 7 mm, wobei der Normalabstand a sämtlicher Mikrorillen 9 bevorzugt gleich groß ist. Die Mikrorillen 9 verlaufen ferner derart über die Blockflanken 7a, 7b, dass sie sich entweder bis zu den Blockkanten 8a, 8b an der Oberfläche der Profilblöcke 4 erstrecken oder bis zu den Blockflanken an den Umfangsrillen 2 reichen oder, durch eine Umfangsrille 2 in ihrem Verlauf unterbrochen, an der Blockflanke 7a, 7b des benachbarten Profilblockes 4 fortgesetzt sind. Die Mikrorillen 9 erstrecken sich ferner bis zum Rillengrund 1a der Diagonalrillen 1 bzw. enden bei den Übergangsrundungen zwischen den Blockflanken 7a, 7b und dem Rillengrund der Diagonalrillen 1. Über ihren Verlauf können die Mikrorillen 9 keinen, einen oder mehrere der Endabschnitte 6a, 6'a der Einschnitte 6 kreuzen.

Wie ferner insbesondere Fig. 2 zeigt, sind die Mikrorillen 9 gerundet ausgeführte Vertiefungen und weisen vorzugsweise einen halbkreisförmigen Querschnitt auf. Ihre größte Tiefe t₃ beträgt 0,2 mm bis 0,5 mm, bei halbkreisförmiger Ausführung entspricht ihre Tiefe dem Radius des Halbkreises. Die Breite d der Mikrorillen 9 an den Blockflanken 7a, 7b entspricht zumindest ihrer Tiefe t₃ und bis zum Vierfachen ihrer Tiefe t₃ insbesondere bis zum Zweifachen.

Auf schneeigem Untergrund sind diese Mikrorillen 9 in der Lage, geringe Mengen an Schnee aufzunehmen und die beim Durchrutschen von Schnee durch die Diagonalrillen 1 entstehenden Scherkräfte besonders gut auf die Blockflanken 7a, 7b der Profilblöcke 4 zu übertragen. Diese Kräfte bewirken ein Verformen der Profilblöcke 4 derart, dass sich die Einschnitte 6 etwas öffnen. Dadurch bilden die Einschnitte Taschen, in welchen sich Schnee ansammeln kann, wodurch die Schnee-Schneereibung erhöht wird.

Besonders vorteilhaft ist es, die Mikrorillen 9 derart auszubilden, dass sie, wie es bei den gezeigten Diagonalrillen 1 der Fall ist, von der Laufstreifenmitte Richtung Laufstreifenaußenseite unter dem erwähnten Winkel δ ansteigen.

Die Erfindung ist auf das dargestellte Ausführungsbeispiel nicht eingeschränkt. Mikrorillen gemäß der Erfindung können in nahezu beliebig mit Profilpositiven gestalteten Laufstreifen vorgehen werden, wenn in diesen Einschnitte vorgesehen sind, die unter dem erwähnten Winkel γ von 60° bis 90° zu Profilpositivkanten verlaufen. Im Allgemeinen werden daher Mikrorillen gemäß der Erfindung an Profilpositivflanken ausgebildet, welche in Umfangsrichtung verlaufende Rillen oder Diagonal-oder Querrillen begrenzen.

### Bezugsziffernliste

- 1: Diagonalrille
- 1a: Rillengrund
- 2: Umfangsrille
- 3: schulterseitiger Profilblock
- 3a, 4a: Profilblockelement
- 4: mittiger Profilblock
- 5, 6: Einschnitt
- 6a, 6'a: Endabschnitt
- 7a, 7b: Blockflanke
- 8a, 8b: Blockkante
- 9: Mikrorille
- a: Normalabstand
- B: Laufstreifenbreite
- d: Breite
- M-M: Umfangsmittellinie
- T: Tiefe
- t₁, t₂, t₃: Tiefe
- α, β, γ, δ: Winkel

## Patentansprüche

1. Fahrzeugluftreifen für Personenkraftwagen, insbesondere für den Einsatz unter winterlichen Fahrbedingungen, mit einem Laufstreifen mit Profilpositiven, insbesondere Profilblöcken (3, 4), und mit über die Laufstreifenbreite V-förmig verlaufenden Diagonalrillen (1), welche Profilpositive begrenzen, wobei Profilpositive vorgesehen sind, in welchen jeweils eine Anzahl von im Wesentlichen parallel zueinander verlaufenden Einschnitten (6) ausgebildet ist, welche sich unter einem Winkel (γ) von 60° bis 90° zu einer das Profilpositiv bei einer Diagonalrille (1) begrenzenden Profilpositivkante (8a, 8b) erstrecken und an der zugehörigen Profilpositivflanke (7a, 7b) in die Diagonalrille (1) münden,
**dadurch gekennzeichnet,**
**dass** an Profilpositivflanken (7a, 7b) von Profilpositiven, welche die Diagonalrillen (1) begrenzen und bei welchen die Einschnitte (6) unter einem Winkel (γ) von 60° bis 90° zu den zugehörigen Profilpositivkanten (8a, 8b) verlaufen, im Wesentlichen geradlinig verlaufende Mikrorillen (9) ausgebildet sind, welche sich derart entlang der Profilpositivflanken (7a, 7b) unter einem spitzen Winkel (δ) von 20° bis 40° zu den Profilpositivkanten (8a, 8b) erstrecken, dass sie in Richtung Laufstreifenaußenseite zur Profilpositivoberfläche ansteigen und welche eine Tiefe (t₃) von 0,2 mm bis 0,5 mm und an der Profilpositivflanke (7a, 7b) eine Breite (d) aufweisen, die zumindest ihrer Tiefe (t₃) entspricht.

2. Fahrzeugluftreifen nach Anspruch 1, **dadurch gekennzeichnet, dass** die Mikrorillen (9) zumindest im Wesentlichen parallel zueinander und unter einem gegenseitigen Normalabstand (a) von 3 mm bis 10 mm, insbesondere von bis zu 7 mm, verlaufen.

3. Fahrzeugluftreifen nach Anspruch 1 oder 2, **dadurch gekennzeichnet, dass** die Breite der Mikrorillen (9) an den Profilpositivflanken (7a, 7b) bis zum Vierfachen ihrer Tiefe, insbesondere bis zum Zweifachen ihrer Tiefe, beträgt.

4. Fahrzeugluftreifen nach einem der Ansprüche 1 bis 3, **dadurch gekennzeichnet, dass** die Mikrorillen (9) entweder bis zur Profilpositivkante (8a, 8b) an der Oberfläche des Profilpositivs oder bis zu einer weiteren eine Rille begrenzenden Profilpositivflanke sowie bis zum Rillengrund (la) bzw. bis zu einer Übergangsrundung zwischen der Profilpositivflanke (7a, 7b) und dem Rillengrund (1a) verlaufen.

5. Fahrzeugluftreifen nach einem der Ansprüche 1 bis 4, **dadurch gekennzeichnet, dass** die Mikrorillen (9) in ihrem Verlauf keinen, einen oder mehrere der an der Profilpositivflanke (7a, 7b) mündenden Endabschnitte (6a, 6'a) der Einschnitte (6) kreuzen.

6. Fahrzeugluftreifen nach einem der Ansprüche 1 bis 5, **dadurch gekennzeichnet, dass** die mit Mikrorillen (9) versehenen Profilpositivflanken (7a, 7b) Flanken von Profilblöcken (4) sind.

## Claims

1. Pneumatic vehicle tyre for passenger vehicles, in particular for use under wintery driving conditions, with a tread having profile positives, in particular profile blocks (3, 4), and with diagonal grooves (1) which run in a V-shaped manner over the tread width and delimit profile positives, wherein profile positives are provided in which in each case a number of sipes (6) running substantially parallel to one another is formed, the sipes extending at an angle (γ) of 60° to 90° to a profile positive edge (8a, 8b), which delimits the profile positive in the case of a diagonal groove (1), and leading at the associated profile positive flank (7a, 7b) into the diagonal groove (1), **characterized in that** the substantially rectilinearly running microgrooves (9) are formed on profile positive flanks (7a, 7b) of profile positives which delimit the diagonal grooves (1) and in which the sipes (6) run at an angle (γ) of 60° to 90° to the associated profile positive edges (8a, 8b), said microgrooves extending along the profile positive flanks (7a, 7b) at an acute angle (δ) of 20° to 40° to the profile positive edges (8a, 8b) in such a manner that they rise with respect to the profile positive surface in the direction of the tread outer side, and said microgrooves having a depth (t₃) of 0.2 mm to 0.5 mm and, at the profile positive flank (7a, 7b), a width (d) which corresponds at least to their depth (t₃).

2. Pneumatic vehicle tyre according to Claim 1, **characterized in that** the microgrooves (9) run at least substantially parallel to one another and at mutual normal distance (a) of 3 mm to 10 mm, in particular of up to 7 mm.

3. Pneumatic vehicle tyre according to Claim 1 or 2, **characterized in that** the width of the microgrooves (9) at the profile positive flanks (7a, 7b) is up to four times their depth, in particular up to twice their depth.

4. Pneumatic vehicle tyre according to one of Claims 1 to 3, **characterized in that** the microgrooves (9) run either as far as the profile positive edge (8a, 8b) on the surface of the profile positive or as far as a further profile positive flank delimiting a groove and as far as the groove base (1a) or as far as a transitional rounding between the profile positive flank (7a, 7b) and the groove base (la).

5. Pneumatic vehicle tyre according to one of Claims 1 to 4, **characterized in that** the profile of the microgrooves (9) intercepts none, one or more than one of the end portions (6a, 6'a) of the sipes (6), the end portions opening out at the profile positive flank (7a, 7b).

6. Pneumatic vehicle tyre according to one of Claims 1 to 5, **characterized in that** the profile positive flanks (7a, 7b) which are provided with microgrooves (9) are flanks of profile blocks (4).

## Revendications

1. Pneumatique de véhicule pour voitures personnelles, en particulier pour l'utilisation en conditions de conduite hivernales, doté d'une bande de roulement dotée d'éléments positifs de sculpture, en particulier de blocs de profil (3, 4), et doté de sillons diagonaux (1) formant des V sur la largeur de la bande de roulement, lesquels délimitent les éléments positifs de sculpture, dans lequel les éléments positifs de sculpture sont prévus pour qu'un nombre d'incisions (6) essentiellement parallèles les unes aux autres sont respectivement réalisées dans ceux-ci, lesquelles s'étendent avec un angle (γ) de 60° à 90° par rapport à un bord d'élément positif de sculpture (8a, 8b) délimitant l'élément positif de sculpture près d'un sillon diagonal (1) et aboutissent dans le sillon diagonal (1) au flanc d'élément positif de sculpture (7a, 7b) lui appartenant, **caractérisé en ce que** sur les flancs d'élément positif de sculpture (7a, 7b) des éléments positifs de sculpture, délimitant les sillons diagonaux (1) et près desquels les incisions (6) forment un angle (γ) de 60° à 90° par rapport aux bords d'élément positif de sculpture (8a, 8b) leur appartenant, sont réalisés des microsillons (9) essentiellement rectilignes, lesquels s'étendent le long des flancs d'élément positif de sculpture (7a, 7b) avec un angle aigu (δ) de 20° à 40° par rapport aux bords d'élément positif de sculpture (8a, 8b) de telle sorte qu'ils montent dans la direction de la face externe de la bande de roulement vers la surface de l'élément positif de sculpture et possèdent une profondeur (t₃) de 0,2 mm à 0,5 mm et une largeur (d) au flanc d'élément positif de sculpture (7a, 7b) correspondant au moins à leur profondeur (t₃).

2. Pneumatique de véhicule selon la revendication 1, **caractérisé en ce que** les microsillons (9) sont au moins essentiellement parallèles les uns aux autres et possèdent un écart normal (a) les uns par rapport aux autres de 3 mm à 10 mm, en particulier jusqu'à 7 mm.

3. Pneumatique de véhicule selon la revendication 1 ou 2, **caractérisé en ce que** la largeur des microsillons (9) aux flancs d'élément positif de sculpture (7a, 7b) est jusqu'au quadruple de leur profondeur, en particulier jusqu'au double de leur profondeur.

4. Pneumatique de véhicule selon l'une des revendications 1 à 3, **caractérisé en ce que** les microsillons (9) vont soit jusqu'au bord d'élément positif de sculpture (8a, 8b) sur la surface de l'élément positif de sculpture soit jusqu'à un autre flanc d'élément positif de sculpture délimitant un sillon ainsi que jusqu'à la base du sillon (la) ou respectivement jusqu'à une courbure de transition entre le flanc d'élément positif de sculpture (7a, 7b) et la base de sillon (la).

5. Pneumatique de véhicule selon l'une des revendications 1 à 4, **caractérisé en ce que** les microsillons (9) croisent dans leur parcours aucune, une ou plusieurs des extrémités (6a, 6'a) des incisions (6) débouchant sur le flanc d'élément positif de sculpture (7a, 7b).

6. Pneumatique de véhicule selon l'une des revendications 1 à 5, **caractérisé en ce que** les flancs d'élément positif de sculpture (7a, 7b) prévus dotés de microsillons (9) sont des flancs de blocs de profil (4) .
